(19) Europäisches Patentamt
European Patent Office
Office européen des brevets

(11) **EP 4 601 180 A1**

(12) **EUROPEAN PATENT APPLICATION**

(43) Date of publication:
**13.08.2025 Bulletin 2025/33**

(21) Application number: **25154848.3**

(22) Date of filing: **30.01.2025**

(51) International Patent Classification (IPC):
$H02M\ 7/5387^{(2007.01)}$   $H02M\ 7/483^{(2007.01)}$
$H02M\ 3/00^{(2006.01)}$   $H02M\ 1/12^{(2006.01)}$
$H02M\ 1/44^{(2007.01)}$   $H02J\ 1/02^{(2006.01)}$
$H02J\ 1/08^{(2006.01)}$   $H02J\ 3/01^{(2006.01)}$

(52) Cooperative Patent Classification (CPC):
H02M 7/5387; H02J 1/02; H02J 1/082; H02J 3/01;
H02M 1/12; H02M 1/123; H02M 1/44; H02M 3/00;
H02M 7/4835

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **07.02.2024 GB 202401609**

(71) Applicant: **Rolls-Royce plc**
**London N1 9FX (GB)**

(72) Inventors:
• **Briff, Pablo A**
**Derby, DE24 8BJ (GB)**
• **Trainer, David R**
**Derby, DE24 8BJ (GB)**
• **Jamieson, Ross A**
**Derby, DE24 8BJ (GB)**
• **Sweet, Mark R**
**Derby, DE24 8BJ (GB)**
• **Jarrah, Zafer**
**Derby, DE24 8BJ (GB)**

(74) Representative: **Rolls-Royce plc**
**P.O. Box 31**
**IP Department (SinA-48)**
**Derby Derbyshire DE24 8BJ (GB)**

(54) **ELECTRICAL POWER SYSTEM**

(57) An electrical power system 100 is described. The electrical power system 100 comprises: a first electrical sub-system 101, 102, 103, 105 having a first voltage; a second electrical sub-system having a second voltage; a power converter 104, 106 connected between the first electrical sub-system and the second electrical sub-system and configured to convert between the first voltage and the second voltage; an impedance synthesizer 14 connected in an intermediate circuit that connects the power converter to the first electrical sub-system, the impedance synthesizer 14 comprising an active bridge circuit 140. The electrical power system further comprises a control system 150 configured to control a switching operation of a plurality of power semiconductor switches $141_{L-H}$, $142_{L-H}$ of the active bridge circuit 140 to control an output voltage $V_{out}$ of the impedance synthesizer 14, whereby the impedance synthesizer 14 emulates a Differential-Mode filter or a Common-Mode filter.

FIG. 6

EP 4 601 180 A1

**Description**

**TECHNICAL FIELD**

This disclosure relates to differential-mode and common-mode filtering in an electrical power system comprising one or more power converters.

**BACKGROUND**

Power electronics converters may be used to provide an interface between different parts of an electrical power system. AC:DC power converters (including AC to DC power converters, known as rectifiers, and DC to AC power converters, known as inverters) convert between an AC voltage and a DC voltage. DC:DC power converters converter between two DC voltages, for example to accommodate variation in the terminal voltage of an energy storage system or to allow power flow between two DC electrical networks that have different operating voltages.

It is known to provide Differential-Mode (DM) and/or Common-Mode (CM) filters at the inputs and/or outputs of power converters to improve the quality of the voltage and power presented to the various connected sub-systems, including loads, power sources, and electrical networks connecting loads and power sources. DM and CM filters are, however, additional and potentially non-trivial sources of both system mass and electrical losses.

**SUMMARY**

According to a first aspect, there is an electrical power system comprising:

a first electrical sub-system having a first voltage;
a second electrical sub-system having a second voltage;
a power converter connected between the first electrical sub-system and the second electrical sub-system and configured to convert between the first voltage and the second voltage;
an impedance synthesizer connected in an intermediate circuit that connects the power converter to the first electrical sub-system, the impedance synthesizer comprising an active bridge circuit; and
a control system configured to control a switching operation of a plurality of power semiconductor switches of the active bridge circuit to control an output voltage of the impedance synthesizer, whereby the impedance synthesizer emulates a Differential-Mode (DM) filter or a Common-Mode (CM) filter.

In an embodiment, the active bridge circuit of the impedance synthesizer is a full-bridge circuit. In another embodiment, the active bridge circuit is a half-bridge circuit. In yet another embodiment, the active bridge circuit is an H-bridge circuit.

In an embodiment, one of the first and second electrical sub-systems is an AC electrical sub-system; one of the first and second electrical sub-systems is a DC electrical sub-system; and the power converter is an AC:DC power converter. The AC:DC power converter may be of any suitable and desired topology, for example a two-level three-phase AC:DC converter circuit, an H-bridge converter circuit or another AC:DC converter circuit.

In an embodiment, the first and second electrical sub-systems are DC electrical sub-systems; and the power converter is a DC:DC power converter. The DC:DC power converter be of any suitable and desired topology, for example a Dual Active Bridge (DAB) DC:DC converter, an LLC resonant DC:DC converter or another DC:DC converter circuit.

In an embodiment, the control system is further configured to: receive an indication of a current at an input terminal of the impedance synthesizer; determine, based on the current and an impedance for emulating the DM filter or CM filter, an output voltage for emulating the impedance; and control the switching operation of the plurality of power semiconductor switches of the impedance synthesizer according to the output voltage.

In an embodiment, the electrical power system further comprises one or more sensors for measuring the current at the input terminal of the impedance synthesizer. The one or more sensors may be current sensors or other sensors from which a current may be derived (e.g., a voltage sensor or a di/dt sensor). In another embodiment, a calculated current (e.g., a reference current) may be used instead of or in addition to a measured current.

In an embodiment, the control system is further configured to: monitor one or more operating parameters of the electrical power system; and, in response to determining a change in one or more of the operating parameters, change the switching operation of the plurality of power semiconductor switches so that the impedance synthesizer emulates a DM filter or a CM filter having a different impedance.

In an embodiment, changing the switching operation of the plurality of power semiconductor switches changes a frequency response of the DM filter or CM filter emulated by the impedance synthesizer.

In an embodiment, control system is configured to control a switching operation of power converter (e.g., the switching operation of a plurality of semiconductor switches of the power converter); and the control system is configured to switch the plurality of power semiconductor switches of the impedance synthesizer at a frequency that is higher than a frequency at which it switches the plurality of power semiconductor switches of the power converter.

In an embodiment, the impedance synthesizer comprises a plurality of parallel-connected active bridge circuits, each of the plurality of active bridge circuits comprising a plurality of power semiconductor switches; and the control system is configured to control a switching operation of the plurality of power semiconductor switches of each of the plurality of active bridge circuits and thereby control the output voltage of the impedance synthesizer.

In an embodiment, the control system is configured to time-interleave the switching operation of the plurality parallel-connected of active bridge circuits of the impedance synthesizer.

In an embodiment, the plurality of parallel-connected active bridge circuits of the impedance synthesizer comprises P groups of Q active bridge circuits, P and Q being integers greater than one. The control system is configured to temporally synchronize the switching operation of the Q active bridge circuits of each group and time-interleave the switching operation of the P groups.

In an embodiment, the impedance synthesizer comprises a plurality of series-connected active bridge circuits, each of the plurality of series-connected active bridge circuits comprising a plurality of power semiconductor switches. The control system is configured to control a switching operation of the plurality of power semiconductor switches of each of the plurality of series-connected active bridge circuits and thereby control the output voltage of the impedance synthesizer.

In an embodiment, the impedance synthesizer comprises a plurality of series-connected cells, each cell of the plurality of series-connecting cells comprising a plurality of parallel-connected active bridge circuits, each of the plurality active bridge circuits comprising a plurality of power semiconductor switches. The control system is configured to control a switching operation of the plurality of power semiconductor switches of each of the plurality of active bridge circuits and thereby control the output voltage of the impedance synthesizer.

In an embodiment, the electrical power system comprises a plurality of impedance synthesizers, each impedance synthesizer connected in one of either the intermediate circuit that connects the power converter to the first electrical sub-system or an intermediate circuit that connects the power converter to the second electrical sub-system, each impedance synthesizer comprising an active bridge circuit. For each respective impedance synthesizer, the control system is configured to control a switching operation of a plurality of power semiconductor switches of the respective active bridge circuit to control an output voltage of the respective impedance synthesizer, whereby the respective impedance synthesizer emulates a DM filter or a CM filter.

In an embodiment, the active bridge circuit of each of the plurality of impedance synthesizers has an identical circuit topology.

In an embodiment, the plurality of impedance synthesizers comprises: a first impedance synthesiser connected in the intermediate circuit that connects the power converter to the first electrical sub-system, wherein the first impedance synthesizer emulates a DM filter; and a second impedance synthesizer connected in the intermediate circuit that connects the power converter to the first electrical sub-system, wherein the first impedance synthesizer emulates a CM filter.

In an embodiment, the plurality of impedance synthesizers comprises: a first impedance synthesizer connected in the intermediate circuit that connects the power converter to the first electrical sub-system; and a second impedance synthesizer connected in the intermediate circuit that connects the power converter to the second electrical sub-system.

In an embodiment, the impedance synthesizer (or at least one of the plurality of impedance synthesizers) emulates: a choke coil (e.g., a CM choke coil); a capacitor (e.g., a CM capacitor or a DM capacitor); a pair of CM capacitors; a three-terminal capacitor; or an inductor.

In an embodiment, the electrical power system further comprises an impedance (e.g., an inductance) at an output of the (or each) active bridge circuit of the (or each) impedance synthesizer.

In an embodiment, the (or each) active bridge circuit of the (or each) impedance synthesizer is a full-bridge circuit and comprises: a first half-bridge circuit comprising a pair of power semiconductor switches and a first intermediate node therebetween; and a second half-bridge circuit connected across the first half-bridge circuit, the second half-bridge circuit comprising a pair of power semiconductor switches and a second intermediate node therebetween.

In an embodiment, the power semiconductor switches are MOSFETs, for example SiC MOSFETs or GaN MOSFETs.

The control system can take any suitable form. For example, the control system may be a single controller, or multiple distributed controllers. It may be implemented in hardware or using a combination of hardware and software. In an embodiment, the control system includes a switching controller that controls the switching operation of the plurality of power semiconductor switches (e.g., by interfacing with gate driver circuits of the active full-bridge circuit) and one or more additional controllers that are communicatively coupled (directly or indirectly) with the switching controller and that determine a desired impedance value for the switching controller to implement through control of the switching operation. The switching controller may form part of the power converter or may be provided separately.

According to a second aspect, there is an aircraft comprising the electrical power system of the first aspect.

In an embodiment, the aircraft comprises a gas turbine engine. One of the first and second electrical sub-systems may be an electrical machine coupled to a shaft or spool of the gas turbine engine, and the other of the first and second electrical sub-systems may be an electrical network for distributing electrical power. The electrical network may be a DC electrical network.

In another embodiment, the aircraft does not comprise a gas turbine engine, for example the aircraft have a purely electrical power and propulsion system. One of the first and second electrical sub-systems may be an energy storage system (e.g., a battery), and the other of the first and second electrical sub-systems may be an electrical network for distributing electrical power. The electrical network may be a DC electrical network.

According to a third aspect, there is a method of operating an electrical power system. The electrical power system comprises a first electrical sub-system having a first voltage; a second electrical sub-system having a second voltage; a power converter connected between the first electrical sub-system and the second electrical sub-system and configured to convert between the first voltage and the second voltage; and an impedance synthesizer connected in an intermediate circuit that connects the power converter to the first electrical sub-system, the impedance synthesizer comprising an active bridge circuit. The method comprises:

controlling a switching operation of a plurality of power semiconductor switches of the active bridge circuit to control an output voltage of the impedance synthesizer, whereby the impedance synthesizer emulates a Differential-Mode filter or a Common-Mode filter.

In an embodiment, the method further comprises: receiving an indication of a current at an input terminal of the impedance synthesizer; and determining, based on the current and an impedance for emulating the DM filter or CM filter, an output voltage for emulating the desired impedance. The switching operation of the plurality of power semiconductor switches is controlled according to the determined output voltage.

In an embodiment, the method further comprises: monitoring one or more operating parameters of the electrical power system; and in response to determining a change in one or more of the operating parameters, changing the switching operation of the plurality of power semiconductor switches so that the impedance synthesizer emulates a DM filter or a CM filter having a different impedance.

In an embodiment, changing the switching operation of the plurality of power semiconductor switches changes a frequency response of the DM filter or CM filter emulated by the impedance synthesizer.

The skilled person will appreciate that except where mutually exclusive, a feature described in relation to any one of the above aspects may be applied mutatis mutandis to any other aspect. Furthermore, except where mutually exclusive, any feature described herein may be applied to any aspect and/or combined with any other feature described herein.

## BRIEF DESCRIPTION OF THE DRAWINGS

Embodiments will now be described by way of example only with reference to the accompanying drawings, which are purely schematic and not to scale, and in which:

FIG. 1 is a schematic illustration of an electrical power system of an aircraft;
FIG. 2 is a schematic plan view of an aircraft;
FIG. 3A is a schematic illustration of a portion of an electrical power system that includes an AC:DC power converter with DM and CM filters at its inputs and outputs;
FIG. 3B is a schematic illustration of a portion of an electrical power system that includes a DC:DC power converter with DM and CM filters at its inputs and outputs;
FIG. 4A is a circuit diagram showing exemplary passive DM and CM filter designs for an AC intermediate circuit;
FIG. 4B is a circuit diagram showing exemplary passive DM and CM filter designs for a DC intermediate circuit;
FIG. 5 illustrates an impedance synthesizer comprising an active bridge circuit for emulating the impedance of a DM or CM filter;
FIG. 6 is schematic illustration of how impedance synthesizers may replace the passive components of DM and CM filters;
FIG. 7 illustrates how an electrical system may be described as a multi-port network
FIG. 8 is an exemplary scheme for emulating an inductance using the impedance synthesizer;
FIG. 9 is a flow chart of a method of operating an electrical power system;
FIG. 10 is a schematic illustration of an impedance synthesizer and lumped output impedance
FIG. 11A is a schematic illustration of an impedance synthesizer that comprises a plurality of parallel-connected active bridge circuits; and
FIG. 11B is a schematic illustration of an impedance synthesizer comprising a plurality of series-connected active bridge circuits.

**DETAILED DESCRIPTION**

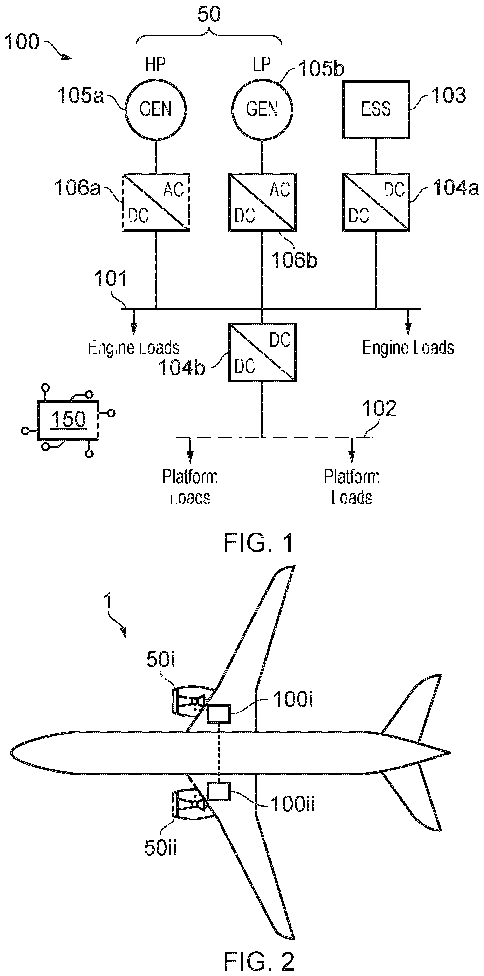

**FIG. 1** illustrates an example electrical power system 100 of an aircraft. The electrical power system 100 includes two DC networks: a first, higher voltage (e.g., 540 $V_{dc}$), DC network 101 that supplies power to electrical loads associated with a gas turbine engine 50 and a second, lower voltage (e.g., 270 $V_{dc}$), DC network 102 that supplies platform electrical loads. The first DC network 101 is supplied with power, via AC:DC power converters 106a, 106b, from first and second electrical generators 105a, 105b that are coupled to the high-pressure (HP) and low-pressure (LP) spools of the gas turbine engine 50. The first DC network 101 is also supplied with power by an energy storage system (ESS) 103, and a first DC:DC power converter 104a is connected between the terminals of the ESS 103 and the first DC network 101 to account for variation in the terminal voltage of the ESS 103 as it charges and discharges. A second DC: DC power converter 103b is connected between the first and second DC networks 101, 102 for power exchange therebetween. Depending on the configuration of the DC:DC converters 103a, 103b, power flow may be unidirectional or bi-directional. Likewise, the AC:DC power converters 106a, 106b may be unidirectional (i.e., the electrical machines 105a, 105b may only be operable as generators) or bidirectional (i.e., the electrical machines 105a, 105b may be operable as motors or generators)

The electrical power system 100 further includes a control system 150. The control system 150, which may be, or be part of, a FADEC, or may comprise multiple distributed controllers, provides control of the various components of electrical power system 100. For example, the control system 150 may control operating modes of the power converters 103a-b, 106a-b and may control, directly or indirectly, gate drive circuits of the power semiconductor switches (e.g., MOSFETs) of the power converters. The control system 150 may further control other components, for example protective switches such as contactors and Solid State Circuit Breakers (SSCBs).

**FIG. 2** shows an aircraft 1 that includes first and second gas turbine engines 50i, 50i. The engines 50i, 50i are associated with electrical power systems 100i, 100ii, which may be of the type shown in FIG. 1 or a variant thereof. As illustrated by the dotted lines, the electrical power systems 100i, 100ii may be connected. For example, each electrical power system 100i, 100ii may have a platform DC electrical network 102 and these may be connected or connectable via bus ties. The gas turbine engines 50i, 50ii may be of any suitable configuration, for example they may be two-spool, three-spool or geared turbofans having one, two or more shaft-coupled electrical machines 105a, 105b.

Aerospace applications such as those described above may have stringent power quality and voltage quality requirements, to help ensure high efficiency and low system failure rates. To achieve this, Differential-Mode (DM) and Common-Mode (CM) filters may be fitted in the intermediate circuits that connect the terminals of power converters to respective sub-systems. For example, where an AC:DC converter (e.g., AC:DC converter 106a) connects an electrical machine (e.g., generator 104a) to a DC electrical network (e.g., DC network 101), it is common to fit DM and/or CM filters between the phase connections of the electrical machine and the AC terminals of the AC:DC converter, and to fit DM and/or CM filters between the DC terminals of the AC:DC converter and the DC electrical network.

In a DC portion of a system, DM and CM filtering may be used to comply with a network total harmonic distortion (THD) requirement, as well as to comply with an electromagnetic emission and EMC level requirement. It can also be used to protect the converter from external conducted harmonics induced from a DC network which may lead to converter malfunctioning due to electromagnetic interference (EMI) issues. In an AC:DC system, DM filters may reduce the switching frequency harmonics that are generated by the converter operation, as seen by the AC system, and therefore reduce potential voltage reflections and amplifications originating from high frequency voltage travelling waves. CM filters may reduce the impact of a high voltage rise (high dv/dt), generated by the operation of the converter, therefore reducing the ageing effect of rapid voltage stress at the bearings of the electrical machine.

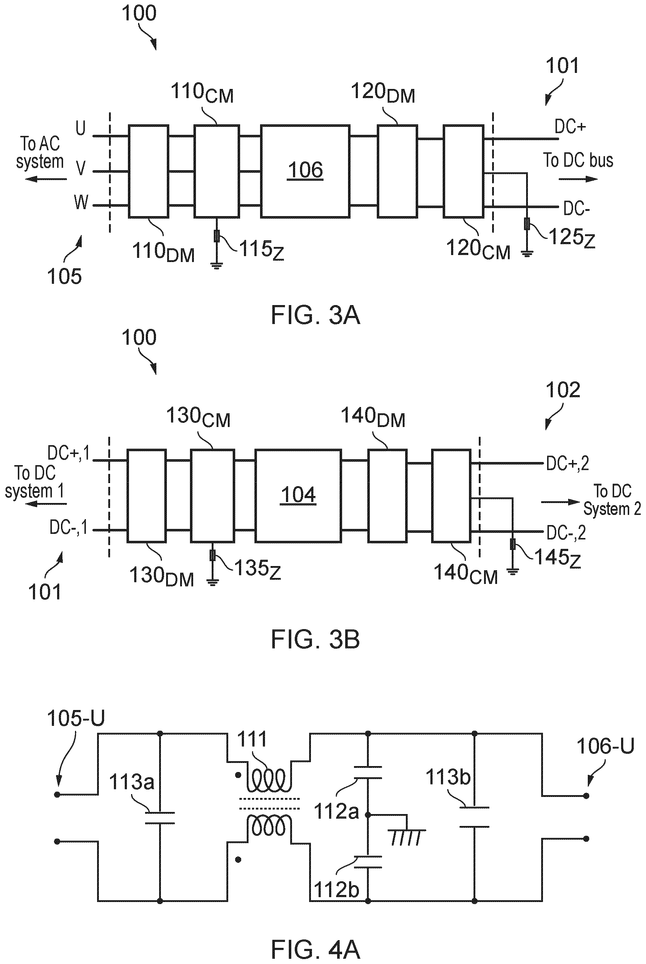

FIG. 3A schematically illustrates the use of DM and CM filters in a portion of an electrical power system 100 that includes an AC:DC power converter 106. The AC: DC power converter 106 provides an interface between an AC sub-system and a DC sub-system. In this example, the AC sub-system is a three-phase electrical machine 105 having phases U, V and W, and the DC sub-system is a DC electrical distribution network 101. An intermediate circuit that connects the AC side of the AC:DC power converter 106 to electrical machine 105 includes a three-phase DM filter $110_{DM}$ and a three-phase CM filter $110_{CM}$. An intermediate circuit that connects the DC side of the AC:DC power converter 106 to the DC electrical network 101 includes a single-phase DM filter $120_{DM}$ and a single-phase CM filter $120_{CM}$. For each of the CM filters $110_{CM}$, $120_{CM}$, there is a ground connection which is shown to have an associated impedance 115z, 125z.

FIG. 3B schematically illustrates the use of DM and CM filters in a portion of an electrical power system 100 that includes a DC: DC power converter 103. The DC:DC power converter 103 provides an interface between a first DC sub-system and a second DC sub-system having respective first and second DC voltages. In this example, the first DC sub-system is a first DC electrical distribution network 101 having a first DC voltage, and the first DC sub-system is a first DC electrical distribution network 102 having a second DC voltage. An intermediate circuit that connects a first DC side of the DC: DC power converter 103 to the first DC electrical network 101 includes a single-phase DM filter $130_{DM}$ and a single-phase CM filter $130_{CM}$. An intermediate circuit that connects the DC side of the AC:DC power converter 106 to the DC electrical network 101 includes a single-phase DM filter $120_{DM}$ and a single-phase CM filter $120_{CM}$. For each of the CM filters $110_{CM}$, $120_{CM}$, there is a ground connection which is shown to have an associated impedance $135_Z$, $145_Z$.

Whilst ground connections $115_z$, 125z, 135z, $145_z$ are shown on both sides of the power converters 104, 106 of FIGS. 3A-3B, this may not be the case and different types of grounding arrangement may be used. For example, at a DC side, an impedance grounding or solid grounding (zero impedance) via a mid-point connection between two capacitors may be used. In other cases, a solid grounding at either the positive or negative DC terminal may be used. At an AC side, grounding may be done via an impedance, typically through an inductor or reactor which increases the impedance as a function of frequency. In other cases, the neutral point of a star-connected transformer or a star-connected electrical machine is grounded. In still other cases, the AC side may not be grounded at all.

**FIG. 4A** illustrates, in circuit form, how DM and CM filters may be implemented in an AC intermediate circuit. For example, the circuit of FIG. 4A may be used to implement the DM and CM filters $110_{DM}$, $110_{CM}$ of FIG. 3A. Note that, for clarity and ease of explanation, only a single phase (U) is illustrated in FIG. 4A.

The CM filter $110_{CM}$ takes the form of a common mode choke coil 111 connected between the phase line and the return path, and a pair of common mode capacitors 112a, 112b connected between the phase line and the return path. An intermediate node located between the common capacitors 112a, 112b is grounded. The DM filter $110_{DM}$ takes the form of a first differential mode capacitor 113a and a second differential mode capacitor 113b. The first differential mode capacitor 113a is connected between the phase line and the return path at a location between the phase connection 105-U to the electrical machine 105 and the common mode choke coil 111. The second differential mode capacitor 113b is connected between the phase line and the return path at a location between the phase connection 106-U to the AC:DC power converter 106 and the common mode capacitors 112a, 112b.

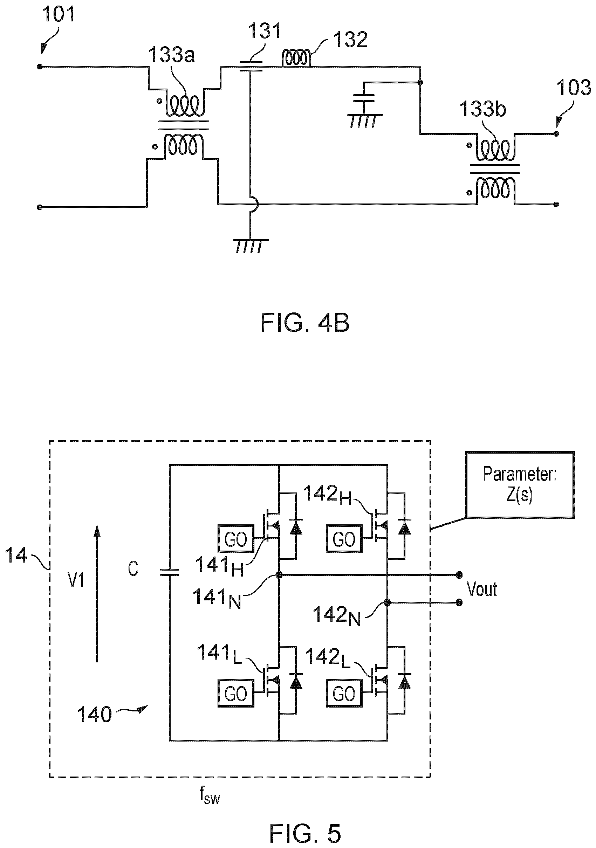

**FIG. 4B** illustrates, again in circuit form, how DM and CM filters may be implemented in a DC intermediate circuit. For example, the circuit of FIG. 4B may be used to implement the DC and CM filters $120_{DM}$, $120_{CM}$ of FIG. 3A, the DC and CM filters $130_{DM}$, $130_{CM}$ of FIG. 3B, or the DC and CM filters $140_{DM}$, $140_{CM}$ of FIG. 3B. In FIG. 4B, an intermediate circuit between a first DC electrical network 101 and an input to a DC:DC converter 103 is shown (i.e., the filters $130_{DM}$, $130_{CM}$ of FIG. 3B are shown).

The DM filter $130_{DM}$ takes the form of a three-terminal capacitor 131 and an inductor 132 connected in the positive DC rail. The CM filter $130_{CM}$ takes the form of a first common mode choke coil 133a and a second common mode choke coil 133b. The first common mode choke coil 133a is connected between the positive and negative DC rails at a location between the connection the DC network 101 and the three-terminal capacitor 131. The second common mode choke coil 133b is connected between the positive and negative DC rails at a location between the connection the DC:DC converter 103 101 and the inductor 132.

Whilst designing and fitting passive DM and CM filters such as those shown in FIGS. 4A and 4B is a relatively simple solution, passive filters may have various drawbacks:

- The filter size may be non-trivial, especially for large current ratings. For example, where DM and CM filters are provided as a part of a power converter, the passive filters can account for more than 50% of the total mass of the converter.

- The losses associated with the filters may be non-trivial, especially for large current ratings.

- The energy that is stored in the filter must dissipated or stored in other parts of the circuit during commutation or fault conditions.

- The component values (_e.g._, capacitance, inductance) of passive filters are fixed and cannot be actively changed once commissioned.

- The filter frequency response may be undesirable at some frequencies, particularly higher frequencies, and can even lead to large capacitive coupling between windings or large inductive parasitic components in capacitors.

- The inductor cores used in passive filters can saturate, even when a small DC current is applied for a short amount of time.

- For a more complex filter frequency response, several passive components are required. This makes the solution more complex, heavy, and costly.

The present disclosure proposes to replace some or all passive DM and CM filter components with impedance synthesizers, each comprising one or more active bridge circuits. As explained in more detail herein, a CM or DM filter may be emulated by presenting a suitable impedance within the intermediate circuit. By determining an output voltage that will emulate the desired impedance, the power semiconductor switches of the active bridge circuit(s) of an impedance synthesizer can be controlled with a Pulse Width Modulation (PWM) scheme that will produce the required output voltage.

Compared with passive filter designs, the impedance can be defined programmatically, such that the filter performance can, for example, be adapted in response to the needs of the system and to avoid undesirable responses at high frequency.

Turning first to **FIG. 5,** this illustrates an impedance synthesizer 14. The impedance synthesizer 14 comprises an active bridge circuit 140, which in this example is a full-bridge circuit. The full-bridge circuit 140 comprises two half-bridge circuits and a DC capacitor, C, connected in parallel. Each half-bridge includes a high-side power semiconductor switch $141_H$, $142_H$ connected to a higher voltage DC rail and a low-side power semiconductor switch $141_L$, $142_L$ connected to a lower voltage DC rail. Each half-bridge further includes a respective intermediate AC node $141_N$, $142_N$, which provides a terminal and is where the respective low-side and high-side power semiconductor switches (e.g., $141_L$, $141_H$) of the half-bridge are connected in series. The intermediate node $141_N$ of a first of the half-bridge provides a first output terminal, whilst the intermediate node $142_N$ of a second of the half-bridge provides a second output terminal, a potential difference between which is $V_{out}$.

The power semiconductor switches $141_{L,H}$, $142_{L,H}$ may be MOSFETs, e.g., SiC or GaN MOSFETs, or another type of transistor. The diodes connected in anti-parallel with the power semiconductor switches $141_{L,H}$, $142_{L,H}$ may be discrete components or may instead represent the body diode character where the semiconductor switches are MOSFETs. Although a full-bridge circuit is illustrated, other active bridge circuits 140 could be used instead. Examples include half-bridge circuits and H-bridge circuits.

In principle, the impedance synthesizer 14 can emulate any impedance, Z, which can be expressed as:

$$Z(s) = Re[Z(s)] + jIm[Z(s)] \qquad (1)$$

$$s = j \times \omega \qquad (2)$$

where Re[Z(s)] is the real part of the impedance, Im[Z(s)] is the imaginary part of the impedance, s is the Laplace operator and $\omega$ is the electrical frequency. Generally, each of Re[Z(s)] and *Im*[Z(s)] may be frequency-dependent or frequency-independent functions of electrical resistance (R), inductance (L) and capacitance (C). The function of a CM filter or DM filter may be achieved by emulating an impedance Z that corresponds to the impedance of the desired CM or DM filter. The capability of the impedance synthesizer 14 (e.g., the range of output voltages it can produce to emulate different impedances) will depend on the capability of the active bridge circuit 140 and the voltage that can be supported by the capacitor, C. Thus, the capability of the impedance synthesizer 14 may be improved by increasing the capability of the active bridge circuit 140 and the capacitance, as described further herein.

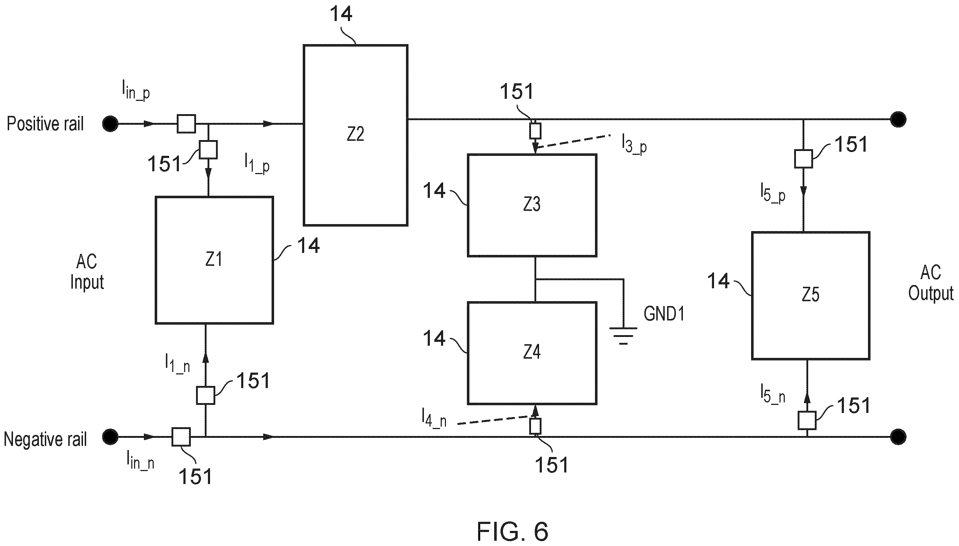

Turning now **FIG. 6,** by way of example this illustrates the AC intermediate circuit of FIG. 4A but with each of the passive CM and DM filter components replaced by an impedance synthesizer 14 that emulates a suitable impedance, $Z_{1-5}$. In particular, the first DM capacitor 113a is replaced by an impedance $Z_1$, the CM choke coil 111 is replaced by an impedance $Z_2$, the first CM capacitor 112a is replaced by an impedance $Z_3$, the second CM capacitor 112a is replaced by an impedance $Z_4$, and the second DM capacitor 113b is replaced by an impedance $Z_5$.

Techniques for controlling an impedance synthesizer 14 to emulate a DM filter component and/or a CM filter component will now be described.

First consider Equation 3, which relates the output voltage, $V_{out}$, across the terminals of the impedance synthesizer 14 and the current flowing across the impedance synthesizer 14, in the Laplace domain:

$$V_{out}(s) = Z(s) * I(s) \qquad (3)$$

It is important to consider that an impedance synthesizer 14 is not driving the current that flows across it - the current is driven by the external circuit. Instead, the purpose of the impedance synthesizer 14 is to react to the current, by imposing an impedance, Z(s), that has the effect of performing differential- and/or common-mode filtering of the current. Thus, if the current, I(s), can be determined (e.g., through measurement) and the required impedance, Z(s), is known, the required output voltage, $V_{out}$, can be determined from the current and the impedance. A suitable PWM switching strategy can then be applied to the power semiconductor switches $141_{L,H}$, $142_{L,H}$ of the active bridge circuit 140 to achieve the desired output voltage, $V_{out}$ and therefore implement the desired DM and CM filtering.

Equation 3 can be written for each of a DM and CM filter component:

$$V_{DM} = Z_{DM} * I_{DM} \qquad (4)$$

$$V_{CM} = Z_{CM} * I_{CM} \qquad (5)$$

where $I_{DM}$ and $I_{CM}$ are the DM and CM currents, $Z_{DM}$ and $Z_{CM}$ are the impedances used to implement the DM and CM filter effects, and $V_{DM}$ and $V_{CM}$ are the associated output voltage components. If an impedance synthesizer 14 is replacing a filter component that is solely associated with a DM current (e.g., the DM capacitor 113a of FIG. 4A), the output voltage $V_{out}(s)$ is determined according to Equation 4. Similarly, if an impedance synthesizer 14 is replacing a filter component that is solely associated with a CM current, the output voltage $V_{out}(s)$ is determined according to Equation 5. If an impedance synthesizer 14 is to emulate an impedance for filtering a current with both DM and CM components, the principle of superposition in linear systems may be utilized. According to this, the CM and DM voltage outputs for each impedance synthesizer 14 are summed independently, and the respective CM and DM control actions may be applied independently. This is described by Equation 6:

$$V_{out} = V_{DM} + V_{CM} = Z_{DM} * I_{DM} + Z_{CM} * I_{CM} \qquad (6)$$

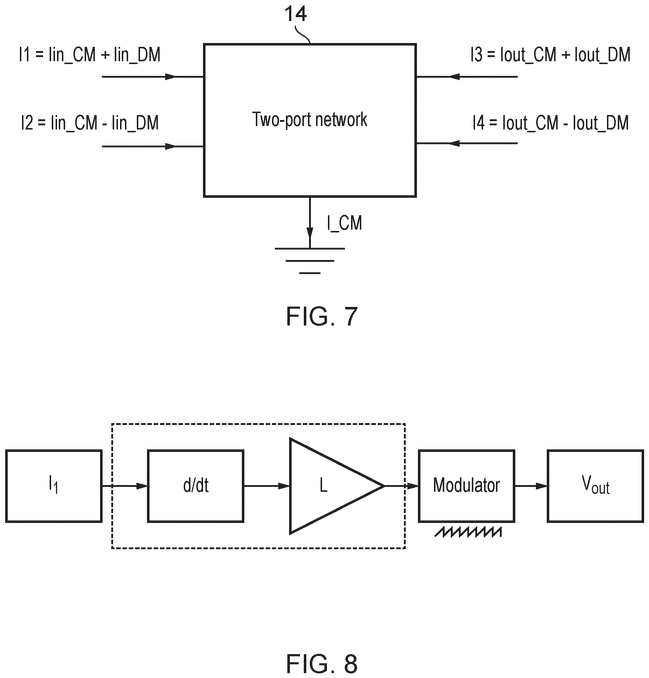

Suitably located current sensors 151, examples of which are shown in FIG. 6, can measure the currents flowing into, or out of, an impedance synthesizer 14, and the DM and CM components of the currents may be derived from these measurements. Examples of deriving the DM and CM current components from measured currents are provided below with reference to FIGS. 6 and 7.

Once the DM and CM current components are known, and the desired DM and CM impedances are known (e.g., by reference to the passive filter components they are replacing), the required output voltage ($V_{out}$) may be determined. Two examples of determining the output voltage from the currents and impedances will now be described.

A first approach for determining the output voltage ($V_{out}$) is to resolve a time-domain difference equation. This means translating the entire Laplace or Z-transform transfer function of the impedance into a discrete-time difference equation. The output of this computation is the total time-domain voltage that corresponds to the total impedance, with each of its frequency components represented by the summation of the time-domain output voltage. An example of this approach is illustrated in **FIG. 8** for a purely inductive impedance of magnitude L. The process starts by determining the current, $I_1$. This may be measured using a suitably located sensor, or a reference current may be obtained or calculated. The current $I_1$ is then differentiated with respect to time (e.g., with sampling instant "k"), and the result multiplied by the desired inductance value L. The result, $L \frac{dI1}{dt}$, is the output voltage $V_{out}$, and at each time instant "k" contains all the frequency-related contents of the impedance.

A second approach for determining the required output voltage ($V_{out}$) is to resolve each frequency component of the impedance independently in the Laplace or Z-transform domain, and to then sum each of these components in the time domain. This approach leverages the superposition principle in linear systems. In this approach, the output voltage corresponding to each impedance value at a given frequency component is computed in the Laplace or Z-transform domain. Then, each component is reverted back or anti-transformed to the time domain, to then sum all the time-domain voltages arising from each frequency, therefore providing the total output voltage. The resulting output voltage is the same as that determined using the first approach.

Once the output voltage, $V_{out}$, has been determined, the control system 150, using the gate drivers (GD in FIG. 5), controls the switching of the power semiconductor switches $141_{L,H}$, $142_{L,H}$ using a PWM scheme suitable for producing the determined output voltage, $V_{out}$. Techniques for deriving PWM schemes for particular output voltages are beyond the scope of the present disclosure but are known to those of ordinary skill in the art.

As noted above, the DM and CM components of the current may be derived from current measurements made by suitably located sensors. Referring first to FIG 6, various current sensors 151 are shown about the intermediate circuit and measure the currents labelled $I_{in\_p}$, $I_{in\_n}$, $I_{1\_n}$, $I_{1\_p}$, $I_{3\_p}$, $I_{4\_n}$, $I_{5\_p}$ and $I_{5\_n}$. This is not intended to be limiting, as other current sensor locations could be used in this and other circuit arrangements. To determine the DM and CM current components associated with each impedance synthesizer 14, first consider **FIG. 7.** Without loss of generality, an electrical system (or a portion thereof) may be described as a multi-port network, where each port has two or more inputs or outputs. Each port current can be decomposed as a sum of a CM current and a DM current. A CM current typically flows into or out of the network to or from a ground connection. A DM current flows between the input or output connections of each port, without circulating through a ground or common-mode connection. It follows that the CM current at the input, $Iin_{CM}$ is defined as:

$$Iin_{CM} = \frac{I1 + I2}{2} \qquad (7)$$

The CM current at the input, $Iout_{CM}$, is defined as:

$$Iout_{CM} = \frac{I3 + I4}{2} \qquad (8)$$

The DM current at the input, $Iin_{DM}$, is defined as:

$$Iin_{DM} = \frac{I1 - I2}{2} \tag{9}$$

The DM current at the output, $Iout_{DM}$, is defined as:

$$Iout_{DM} = \frac{I3 - I4}{2} \tag{10}$$

Returning to FIG. 6, utilizing the measured currents ($I_{in\_p}$, $I_{in\_n}$, $I_{1\_n}$, $I_{1\_p}$, $I_{3\_p}$, $I_{4\_n}$, $I_{5\_p}$ and $I_{5\_n}$) and Equations 7-10, the DM and CM current components can be determined for each of the five impedance synthesizers 14. Again, the principle of superposition in linear systems may then be applied, whereby the CM and DM voltage outputs for each impedance synthesizer 14 are summed independently, and the respective CM and DM control actions may be applied independently.

Applying the superposition principle to the first impedance, $Z_1$, gives:

$$V_{out\_Z1} = V_{Z1\_DM} + V_{Z1\_CM} \tag{11}$$

where $V_{out\_Z1}$ is the output voltage associated with the impedance synthesizer 14 corresponding to the impedance $Z_1$, and $V_{Z1\_DM}$ and $V_{Z1\_CM}$ are the DM and CM components of $V_{out+Z1}$. Now applying equation (3) and equations (7)-(10) gives:

$$V_{Z1\_DM} = Z_{1\_DM} * I_{1_{DM}} = Z_{1\_DM} * \left(\frac{I_{1\_p} - I_{1\_n}}{2}\right) \tag{12}$$

$$V_{Z1\_CM} = Z_{1\_CM} * I_{1_{CM}} = Z_{1\_CM} * \left(\frac{I_{1\_p} + I_{1\_n}}{2}\right) \tag{13}$$

where $Z_{1\_DM}$ and $Z_{1\_CM}$ are the DM and CM contributions to the impedance $Z_1$ and $I_{1_{DM}}$ and $I_{1_{CM}}$ are the DM and CM current components.

$Z_1$ replaces a DM capacitor 113a and is associated with only a DM current. We can therefore say that $V_{out\_Z1} = V_{Z1\_DM}$, and ignore the CM contribution in Equation 11. The output voltage, $V_{out\_Z1}$, is therefore given by Equation 12, which is expressed in terms of $Z_{1\_DM}$ (a capacitance of known value $C_1$) and the measured currents $I_{1\_n}$, $I_{1\_p}$. A PWM control action can be derived for this output voltage.

An alternative way of approaching the CM component of $Z_1$ is that, in the absence of any common-mode path in this circuit branch, the value of $Z_{1\_CM}$ is that of an open circuit, i.e., infinity. Clearly, the impedance synthesizer 14 cannot truly emulate an infinite impedance - the impedance it can emulate is limited by the voltage that can be stored by its capacitor, which is clearly not infinite. However, we can also say that in the absence of any common-mode path, $I_{1\_p} + I_{1\_n} = 0$. Considering Equation 13, the result of $I_{1\_p} + I_{1\_n} = 0$ is that $V_{Z1\_CM}$ tends to zero. Thus, applying the superposition principle (Equation 11), we still find that the output voltage, $V_{out\_Z1}$, is given by Equation 12. Thus, we arrive at the same result as if we had ignored the CM component from the start.

It is notable that although an impedance synthesizer 14 cannot truly emulate an infinite impedance, it can approximate one by switching off all the power semiconductor switches $141_H$, $142_H$ of the impedance synthesizer 14. This is only an approximation of an infinite impedance because if the external circuit imposes a voltage higher than the voltage of the impedance synthesizer capacitor voltage, the anti-parallel diodes of the power semiconductor switches will start to conduct and charge the capacitor to the peak of the external voltage. Nevertheless, switching off all the power semiconductor switches $141_H$, $142_H$ provides a way of approximating large impedances, particularly those above the capability of the impedance synthesizer 14. Techniques for increasing the capability of the impedance synthesizer 14, for example utilizing parallel-connected or series-connected bridge active bridge circuits 140, are described below.

Turning to the fifth impedance, $Z_5$, this also replaces a DM capacitor 113b and is therefore conceptually the same as the first impedance $Z_1$. Applying the Equations gives:

$$V_{out\_Z5} = V_{Z5\_DM} + V_{Z5\_CM} \tag{11}$$

$$V_{Z5\_DM} = Z_{5\_DM} * I_{5_{DM}} = Z_{5\_DM} * \left(\frac{I_{5\_p} - I_{5\_n}}{2}\right) \tag{12}$$

$$V_{Z5\_CM} = Z_{5\_CM} * I_{5_{DM}} = Z_{5\_CM} * (\frac{I_{5\_p}+I_{5\_n}}{2}) \tag{13}$$

As with the first impedance, $Z_1$, there is no CM current. Therefore, we can ignore the CM components and obtain:

$$V_{out\_Z5} = V_{Z5\_DM} = Z_{5\_DM} * (\frac{I_{5\_p}-I_{5\_n}}{2}) \tag{14}$$

The value of $Z_{5\_DM}$ is the impedance of the DM capacitor it replaces, <u>e.g.</u>, a capacitance of $C_5$.

Before considering the remaining impedances $Z_{2-4}$, it is noted that whilst the impedance values selected for $Z_{1\_DM}$ and $Z_{5\_DM}$ have been said to be those of the passive filter components they have replaced (<u>i.e.</u>, capacitances $C_1$, $C_5$), an advantage of the present disclosure is that impedance values can be programmatically changed as desired. For example, the initial system design may call for impedances of $C_1$, $C_5$, but different impedances (<u>e.g.</u>, different values and/or different frequency responses) may be desirable to take account of system ageing, changes in operating condition or faults. According to the present disclosure, such changes can be made 'on the fly', without, <u>e.g.</u>, physically replacing components.

Turning to the second impedance, $Z_2$, we have:

$$V_{out\_Z2} = V_{Z2\_DM} + V_{Z2\_CM} \tag{15}$$

It helps to introduce two further currents, $I_{2\_p}$ and $I_{2\_n}$, that are not measured but can be expressed in terms of the measured currents:

$$I_{2\_p} = I_{in\_p} - I_{1\_p} \tag{16}$$

$$I_{2\_n} = I_{in\_n} - I_{1\_n} \tag{17}$$

Now applying Equations (7)-(10) gives:

$$V_{Z2\_DM} = Z_{2\_DM} * I_{2_{DM}} = Z_{2\_DM} * (\frac{I_{2\_p}-I_{2\_n}}{2}) \tag{18}$$

$$V_{Z2\_CM} = Z_{2\_CM} * I_{2_{DM}} = Z_{2\_CM} * (\frac{I_{2\_p}+I_{2\_n}}{2}) \tag{19}$$

In the case of $Z_2$, the impedance synthesizer 14 replaces a CM choke coil 111 through which a DM current may also flow. Thus, the output voltage is given by Equation 15, which when combined with Equations 16-19 gives:

$$V_{out\_Z2} = Z_{2\_DM} * \left(\frac{(I_{in\_p}+I_{1\_n})-(I_{in_n}+I_{1p})}{2}\right) + Z_{2_{CM}} * \left(\frac{(I_{in\_p}+I_{in\_n})-(I_{1\_p}+I_{1_n})}{2}\right) \tag{20}$$

Turning now to $Z_3$ and $Z_4$, because of the grounding arrangement therebetween, $Z_3$ and $Z_4$ may be considered DM-impedances but as a set form a combination of a DM and CM impedance. Counterintuitively, in this arrangement, it must be respected that $Z_{3,DM} = Z_{3,CM}$ and $Z_{4,CM} = Z_{4,DM}$. This is because it is the impedance set {Z3, Z4} which has the ability to synthesise the real DM and CM components - through the ground connection - and not each individual impedance Z3 and Z4. This does not affect the generality of the idea; however, it does mean it may be beneficial to treat Z3 and Z4 as one combined impedance with a ground connection, similar to the two-port network shown in Fig. 7. Applying the same equations to $Z_3$ and $Z_4$ gives:

$$V_{out\_Z3} = V_{Z3\_DM} + V_{Z3\_CM} \tag{21}$$

$$V_{out\_Z4} = V_{Z4\_DM} + V_{Z4\_CM} \tag{22}$$

$$V_{Z3\_DM} = Z_{3\_DM} * I_{3\_DM} = Z_{3\_DM} * \left(\frac{I_{3\_p} - I_{4\_n}}{2}\right) \tag{23}$$

$$V_{Z3\_CM} = Z_{3\_CM} * I_{3\_CM} = Z_{3\_CM} * \left(\frac{I_{3\_p} + I_{4\_n}}{2}\right) \tag{24}$$

$$V_{Z4\_DM} = Z_{4\_DM} * I_{4\_DM} = Z_{4\_DM} * \left(\frac{I_{3\_p} - I_{4\_n}}{2}\right) \tag{25}$$

$$V_{Z4\_CM} = Z_{4\_CM} * I_{4\_CM} = Z_{4\_CM} * \left(\frac{I_{3\_p} + I_{4\_n}}{2}\right) \tag{26}$$

Combining Equations 21-26 gives:

$$V_{out\_Z3} = \frac{I_{3\_p}}{2} * (Z_{3_{DM}} + Z_{3_{CM}}) + \frac{I_{4n}}{2} * (Z_{3_{CM}} - Z_{3\_DM}) \tag{27}$$

$$V_{out\_Z4} = \frac{I_{3\_p}}{2} * (Z_{4_{DM}} + Z_{4_{CM}}) + \frac{I_{4n}}{2} * (Z_{4_{CM}} - Z_{4\_DM}) \tag{28}$$

The above analysis does not limit the present disclosure. Not only could a similar analysis be performed for the DC circuit of FIG. 4B (by replacing the CM and DM filter components 131, 132, 133a-b with impedance synthesizers 14), but a similar analysis could be performed for different DM and CM filter arrangements in the DC and AC intermediate circuits connecting power converters to electrical sub-systems.

Further, the locations of the current sensors 151 in FIG. 6 does not limit the present disclosure. A different set of currents may be measured and the currents flowing into and out of the impedance synthesizers 14 derived from this different set of current measurements. Further, at least some of the currents could be estimated or calculated, for example using reference values.

Further still, different arrangements of impedance synthesizers 14 may be used to emulate the same set of DM and CM filter components. For example, referring to FIG. 6, a single impedance synthesizer could replace the two impedance synthesizers emulating the third and fourth impedances, $Z_3$, $Z_4$. Other circuit arrangements could present other opportunities for combining DM and CM filter components into a single impedance synthesizer that emulates their combined impedance.

In some examples of the present disclosure, each impedance synthesizer 14 in the system 100 may be built from active bridge circuits of identical circuit topology. For example, each impedance synthesizer 14 may comprise one or more H-bridge circuits. Further, the power converters 103, 106 may be built from active bridge circuits of the topology as the impedance synthesizers 14. The use of a standardized circuit topology may improve ease of manufacture, for example. Whilst the same circuit topologies may be used, the component parameters may be different. For example, the current ratings of the power semiconductors 141L,H, 142L,H of the impedance synthesizer 14 may be different to the current ratings of the power semiconductors of the power converters 103, 106.

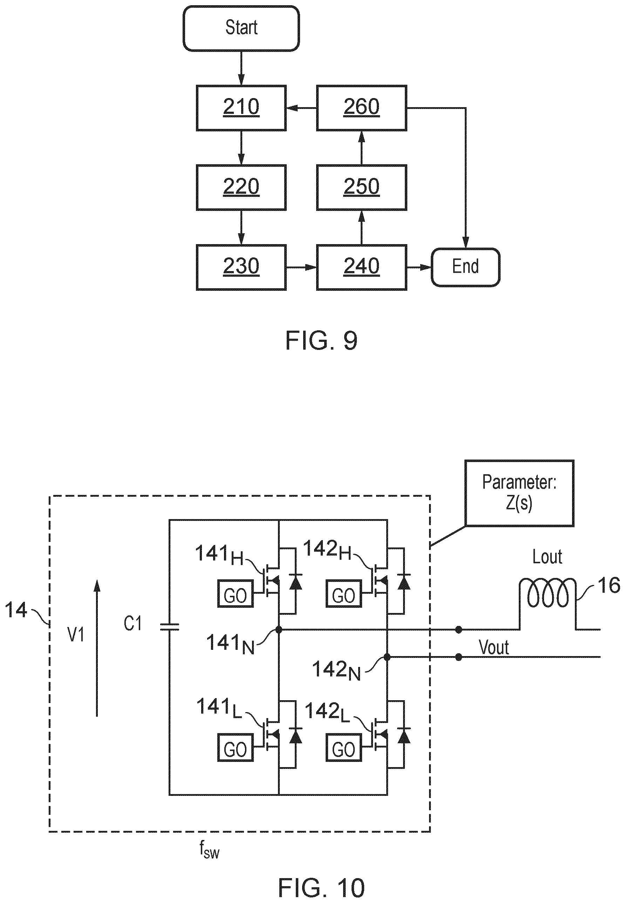

FIG. 9 is a flow chart illustrating a method 200 of controlling an electrical power system 100. The system 100 includes a power converter 104, 106 that converts between first and second voltages associated with first and second electrical sub-systems, and an impedance synthesizer 14 located between one side of the power converter 103, 106 and one of the first and second electrical sub-systems. The method 200 may be performed by a control system 150 of the electrical power system. Said control system 150 may be in communication with suitable sensors (e.g., current sensors 151, voltage sensors (not shown) or other sensors). While the method 200 is described with reference to the control of just one impedance synthesizer 14, the electrical power system may comprise more than one impedance synthesizer 14 (e.g., one or more than one impedance synthesizer 14 at each side of the power converter) and the method may be repeated for each impedance synthesizer 14.

The method 200 begins at 210, where the control system 150 determines an impedance for emulating a DM and/or CM filter (e.g., a DM and/or CM filter component such as a capacitor or choke coil). In some embodiments, the control system 150 may retrieve a pre-defined impedance value or function from accessible computer memory. For example, during system design, a system designer may identify component parameters that should be used and store these in memory.

The method proceeds to 220, where the control system 150 receives an indication of a current at input terminals of the impedance synthesizer 14. To this end, the electrical power system 100 may include suitably located sensors 151 which provide current measurements to the control system 150. In other embodiments, the control system 150 may derive the current from current measurements taken elsewhere in the electrical power system (e.g., through application of Kirchhoff's laws) or by use of a reference current.

The method proceeds to 230, where the control system 150 determines, based on the impedance determined at 210 and the current determined at 220, an output voltage, $V_{out}$, for emulating the impedance. Techniques for doing so have been described above, including resolving a time-domain difference equation and resolving each frequency component of the impedance independently in the Laplace or Z-transform domain, and to then sum each of these components in the time domain.

The method proceeds to 240, where the control system 150 controls a switching operation of a plurality of power semiconductor switches $141_{L-H}$, $142_{L-H}$ of the active bridge circuit 140 so that the output voltage of the impedance synthesizer is equal to the output voltage, $V_{out}$, determined at 230. In this way, the impedance synthesizer 14 will emulate a Differential-Mode filter or a Common-Mode filter with the impedance determined at 210. Controlling the switching operation of the plurality of power semiconductor switches $141_{L-H}$, $142_{L-H}$ involves applying a suitable PWM control scheme, as will be understood by those of ordinary skill in the art.

In some examples, the control system 150 may skip steps 210-230 and proceed straight to step 240, for example if a suitable PWM control scheme is already available to the control system (e.g., is stored in accessible memory). For example, the electrical power system 100 may initialize into a known, standard operating condition in which the system is expected to have known operating parameters (e.g., current values, DM and CM filter requirements). In this case, the control system 150 may not need to perform steps 210-230.

After step 240, the method 200 may end. In other examples, the method 240 proceeds to 250 where the control system 150 monitors one or more operating parameters of the electrical power system 100. At 260, the control system 150 determines, based on the monitored operating parameter(s), whether there has been a change in an operating condition of the system 100. If no change is detected, the method 200 may end. If a change is detected, the method 200 may instead proceed back to 210 where a new impedance value or function, suitable for the new operating condition of the system 100, is determined. The new impedance may have a different value and/or a different frequency response.

In one group of examples, the detected change in operating condition is a fault condition. For example, the control system 150 may monitor a voltage, or other parameter, of one or both of the electrical sub-systems or the power converter to determine a fault condition. In response to a fault condition (e.g., a short-circuit fault or pole-to-pole fault), the control system 150 may, at 210, change an impedance (e.g., a frequency response) of the impedance synthesizer 14.

In another group of examples, the detected change in operating condition is a change in the loading of one or both of the electrical sub-systems. For example, if the loading increases, or a new load is connected to a sub-system, it may be desirable to adjust the impedance of the impedance synthesizer 14.

FIG. 10 illustrates a variant of the impedance synthesizer 14 in which a lumped inductance 16 is fitted at the output. Providing the additional inductance 16 may improve the control of the output current.

As noted previously, in principle, any type of impedance may be synthesized by the impedance synthesizer 14, provided there is sufficient control bandwidth to produce a reasonably undistorted waveform at the output terminals. So that the impedance synthesizer 14 presents itself as a time-continuous component to the rest of the electrical power system, the control system 150 may switch the power semiconductor switches $141_{L,H}$, $142_{L,H}$ at a frequency ($f_{sw}$) that is higher than the switching frequency of the power semiconductor switches of the power converter(s) (e.g., AC:DC converters 106 and DC:DC power converters 103) of the electrical power system.

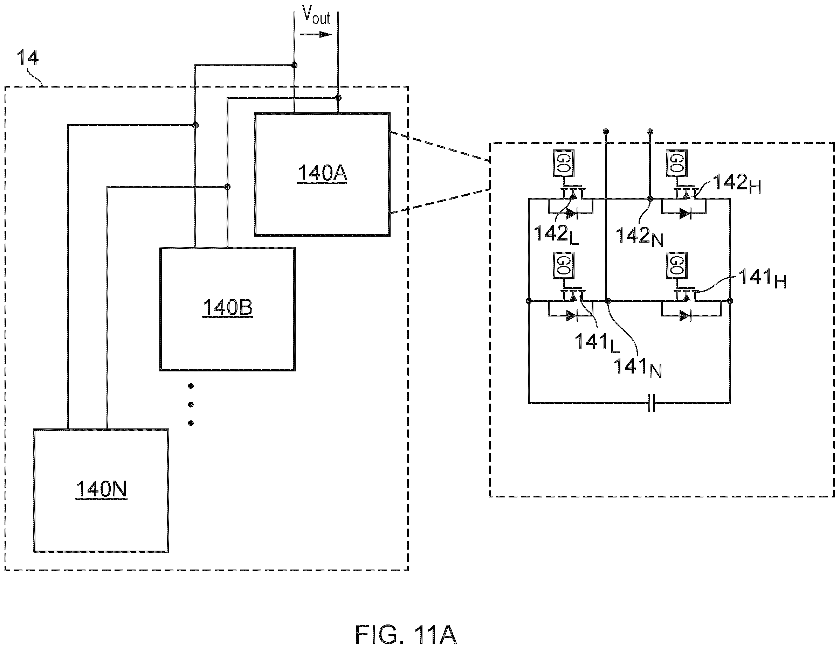

FIG. 11A illustrates a variant in which an impedance synthesizer 14 includes a plurality (an integer number N) of active bridge circuits 140A, 140B, ..., 140N connected in parallel across common input terminals. Once again, full-bridge circuits are illustrated but other active bridge circuits may be used instead.

Utilizing a plurality of parallel active bridge circuits, the current across each active bridge circuit is reduced by a factor of N (i.e., the current it is I1/N). The total conduction losses are reduced by a factor of N, as each of the N parallel-connected electronic impedances dissipate $1/N^2$ of the conduction power losses that would be dissipated by one equivalent electronic impedance. Further, due to the linear dependency of the switching losses with switching frequency, input voltage (drain-to-source voltage for a MOSFET) and conducted current, reducing the conducted current by a factor of N in each of the parallel branches allows for an increase of the switching frequency by the same factor (N), assuming constant switching losses per active bridge circuit 140.

As noted above, switching the power semiconductor switches $141_{LH}$, $142_{L,H}$ of the impedance synthesizer 14 faster than the power semiconductor switches of the power converter(s) improves the time-continuity of the presented impedance waveform. Thus, by utilizing a plurality of parallel-connected active bridge circuits, 140a, 140b, ..., 140N, the time-continuity of the impedance may be improved further, and/or a larger range of impedances may be emulated without unacceptable degradation of the impedance waveform. Further, in some instances the magnitude of the current, may be a limiting factor in determining whether the impedance synthesizer 14 can emulate a given impedance due to, e.g., the current ratings of the power semiconductor switches $141_{L,H}$, $142_{L,H}$. Increasing the number of parallel-connected active bridge circuits, and thus reducing the current across each active bridge circuit, may relax this limitation.

The switching operation of each of the plurality of parallel-connected active bridge circuits may be synchronized in time (i.e., if power semiconductor switch $141_L$ of bridge circuit 140A is switched on, the semiconductor switch $141_L$ of all other bridge circuits 140B, ..., 140N are switched on at the same time). In other examples, however, the switching operation of the parallel-connected active bridge circuits 140A-N may be time-interleaved.

In a first example of time-interleaved switching, the switching operation of each individual one of the active bridge circuits 140A, 140B, ..., 140N is temporally offset from the others so that each active bridge circuit has a unique switching period within each fundamental frequency cycle. Time interleaving the switching of N active bridge circuits 140A, 140B, ..., 140N in this way emulates the fast switching of a single active bridge circuit. In other words, each one of the N active bridge circuits 140A, 140B, ... , 140N need not be switched any faster but, from the perspective of the external circuit, the impedance synthesizer 14 appears to be switching N times faster due to the staggered switching of the N active bridge circuits. Each active bridge circuit handles the full current I1 but for only a fraction, 1/N, of each fundamental cycle.

In a second example of time-interleaved switching, the N active bridge circuits 140A, 140B, ... , 140N are divided into P groups of Q active bridge circuits (i.e., P x Q = N). For a given one of the P groups, the switching operation of the Q active bridge circuits is synchronized. However, the switching operation of each of the P groups are time-interleaved so that each group of Q active bridge circuits has a unique switching period within each fundamental frequency cycle. From the perspective of the external circuit, the switching rate appears higher by a factor of P due to the staggered switching of the P groups. Using this approach, each active bridge circuit conducts only a fraction, 1/Q, of the total current I1. Reducing the current by a factor of Q allows the switching rate of the power semiconductor switches to be increase by a factor of Q. Thus, the overall increase in switching rate may be as a high as a factor of P x Q = N, as in the previous examples. However, compared with the first example of inter-leaved switching, the current that must be conducted by each active bridge circuit is lower (I1/Q rather than I1). Compared with the non-interleaved example, the rate at which the power semiconductor switches must be switched $141_{L,H}$, $142_{L,H}$ to achieve the factor of N increase is reduced by factor of Q. Thus, the second example may provide a balance between the requirements of the non-interleaved approach (reduced current but requiring a high semiconductor switching rate) and the first example of interleaved switching (no increase in semiconductor switching rate but high current per active bridge circuit).

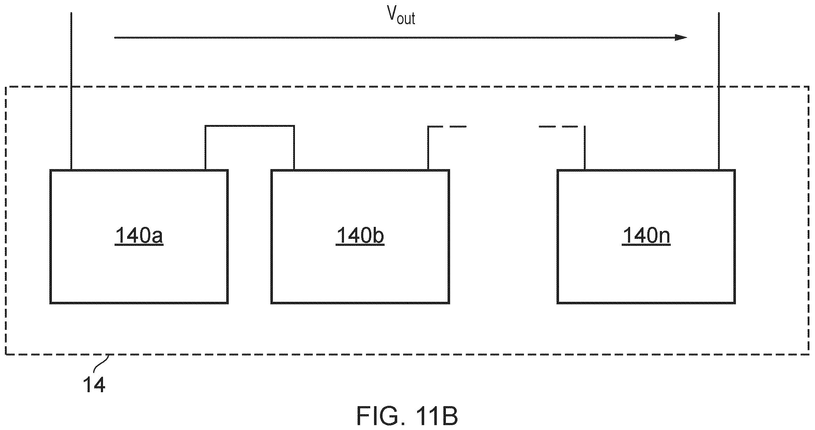

**FIG. 11B** illustrates another variant in which the impedance synthesizer 14 includes a plurality (an integer number n) of active cells 140a, 140b, ..., 140n connected in series between input terminals. Each cell (e.g., cell 140a) may consist of a single active bridge circuit 140 or may comprise a plurality of active bridge circuits 140A, 140B, ..., 140N connected in parallel. Utilizing series-connected cells 140a-n increases the maximum inductance that the impedance synthesizer 14 can emulate. An optimal configuration for the desired application, in terms of maximum impedance to be emulated and required waveform quality, may be a combination of series- and parallel- connection of active bridge circuits.

Various examples have been described, each of which feature various combinations of features. It will be appreciated by those skilled in the art that, except where clearly mutually exclusive, any of the features may be employed separately or in combination with any other features and the invention extends to and includes all combinations and sub-combinations of one or more features described herein.

It will also be appreciated that whilst the invention has been described with reference to aircraft and aircraft power and propulsion systems, the techniques described herein could be used for many other applications. These include, but are not limited to, automotive, marine and land-based applications.

**Claims**

1. An electrical power system (100) comprising:

   a first electrical sub-system (101, 102, 103, 105) having a first voltage;
   a second electrical sub-system (101, 102, 103, 105) having a second voltage;
   a power converter (104, 106) connected between the first electrical sub-system and the second electrical sub-system and configured to convert between the first voltage and the second voltage;
   an impedance synthesizer (14) connected in an intermediate circuit that connects the power converter to the first electrical sub-system, the impedance synthesizer (140) comprising an active bridge circuit (140); and
   a control system (150) configured to control a switching operation of a plurality of power semiconductor switches ($141_{L-H}$, $142_{L-H}$) of the active bridge circuit (140) to control an output voltage ($V_{out}$) of the impedance synthesizer (14), whereby the impedance synthesizer (14) emulates a Differential-Mode filter or a Common-Mode filter.

2. The electrical power system (100) of claim 1, wherein the control system (150) is further configured to:

   receive an indication of a current at an input terminal of the impedance synthesizer (14);
   determine, based on the current and an impedance for emulating the Differential-Mode filter or Common-Mode filter, an output voltage ($V_{out}$) for emulating the impedance; and

control the switching operation of the plurality of power semiconductor switches (141L,H, 142L,H) of the impedance synthesizer (14) according to the output voltage ($V_{out}$).

3. The electrical power system (100) of claim 2, further comprising one or more sensors (151) for measuring the current at the input terminal of the impedance synthesizer (14).

4. The electrical power (100) system of any one of claims 1 to 3, wherein the control system (150) is further configured to:

monitor one or more operating parameters of the electrical power system; and
in response to determining a change in one or more of the operating parameters, change the switching operation of the plurality of power semiconductor switches so that the impedance synthesizer (14) emulates a Differential-Mode filter or a Common-Mode filter having a different impedance.

5. The electrical power system (100) of claim 4, wherein changing the switching operation of the plurality of power semiconductor switches ($141_{L-H}$, $142_{L-H}$) changes a frequency response of the Differential-Mode filter or Common-Mode filter emulated by the impedance synthesizer (14).

6. The electrical power system (100) of any one of the preceding claims, wherein:

the power converter (104, 106) is further configured to control a switching operation of the power converter (103, 106);
the control system (150) is configured to switch the plurality of power semiconductor switches of the impedance synthesizer ($141_{L-H}$, $142_{L-H}$) at a frequency that is higher than a frequency at which it switches the power converter.

7. The electrical power system (100) of any one of the preceding claims, wherein:

the impedance synthesizer (14) comprises a plurality of parallel-connected active bridge circuits (140A-N), each of the plurality of active bridge circuits (140AN) comprising a plurality of power semiconductor switches ($141_{L-H}$, $142_{L-H}$); and
the control system (150) is configured to control a switching operation of the plurality of power semiconductor switches ($141_{L-H}$, $142_{L-H}$) of each of the plurality of active bridge circuits (140A-N) and thereby control the output voltage ($V_{out}$) of the impedance synthesizer (14).

8. The electrical power system (100) of claim 7, wherein the control system (150) is configured to time-interleave the switching operation of the plurality parallel-connected of active bridge circuits (140A-N) of the impedance synthesizer (14).

9. The electrical power system (100) of any one of the preceding claims, wherein:

the impedance synthesizer (14) comprises a plurality of series-connected active bridge circuits (140a-n), each of the plurality of series-connected active bridge circuits (140a-n) comprising a plurality of power semiconductor switches ($141_{L-H}$, $142_{L-H}$); and
the control system (150) is configured to control a switching operation of the plurality of power semiconductor switches ($141_{L-H}$, $142_{L-H}$) of each of the plurality of series-connected active bridge circuits (140a-n) and thereby control the output voltage ($V_{out}$) of the impedance synthesizer (14).

10. The electrical power system (100) of any one of the preceding claims, wherein:

the impedance synthesizer (14) comprises a plurality of series-connected cells (140a-n), each cell of the plurality of series-connecting cells (140a-n) comprising a plurality of parallel-connected active bridge circuits (140A-N), each of the plurality active bridge circuits comprising a plurality of power semiconductor switches ($141_{L-H}$, $142_{L-H}$); and
the control system (150) is configured to control a switching operation of the plurality of power semiconductor switches ($141_{L-H}$, $142_{L-H}$) of each of the plurality of active bridge circuits and thereby control the output voltage of the impedance synthesizer (14).

11. The electrical power system (100) of any one of the preceding claims, comprising a plurality of impedance synthesizers (14), each impedance synthesizer connected in one of either the intermediate circuit that connects the power converter (103, 106) to the first electrical sub-system (101, 105) or an intermediate circuit that connects the power converter (103, 106) to the second electrical sub-system (102, 101), each impedance synthesizer (14) comprising an active bridge circuit (140),

wherein, for each respective impedance synthesizer (14), the control system (150) is configured to control a switching operation of a plurality of power semiconductor switches ($141_{L-H}$, $142_{L-H}$) of the respective active bridge circuit (140) to control an output voltage ($V_{out}$) of the respective impedance synthesizer (14), whereby the respective impedance synthesizer (14) emulates a Differential-Mode filter or a Common-Mode filter.

12. The electrical power system (100) of any one of the preceding claims, wherein one of the first and second electrical sub-systems is an AC electrical sub-system (105); one of the first and second electrical sub-systems is a DC electrical sub-system (101); and the power converter is an AC:DC power converter (106).

13. The electrical power system (100) of any one of the preceding claims, wherein both the first and second electrical sub-systems are DC electrical sub-systems (101, 102, 103); and the power converter is a DC:DC power converter (104).

14. A method (200) of operating an electrical power system (100), the electrical power system (100) comprising a first electrical sub-system (101, 102, 103, 105) having a first voltage; a second electrical sub-system (101, 102, 103, 105) having a second voltage; a power converter (104, 106) connected between the first electrical sub-system and the second electrical sub-system and configured to convert between the first voltage and the second voltage; and an impedance synthesizer (14) connected in an intermediate circuit that connects the power converter to the first electrical sub-system, the impedance synthesizer (140) comprising an active bridge circuit (140), the method comprising:

controlling (240) a switching operation of a plurality of power semiconductor switches ($141_{L-H}$, $142_{L-H}$) of the active bridge circuit (140) to control an output voltage ($V_{out}$) of the impedance synthesizer (14), whereby the impedance synthesizer (14) emulates a Differential-Mode filter or a Common-Mode filter.

15. The method (200) of claim 19, further comprising:

receiving (220) an indication of a current at an input terminal of the impedance synthesizer (14); and determining (230), based on the current and an impedance for emulating the Differential-Mode filter or Common-Mode filter, an output voltage ($V_{out}$) for emulating the impedance; and wherein the switching operation of the plurality of power semiconductor switches (141L,H, 142L,H) of the active bridge circuit (140) is controlled (240) according to the determined output voltage ($V_{out}$).

FIG. 1

FIG. 2

100

$110_{CM}$    $120_{DM}$

101

To AC system

U
V
W

106

DC+

To DC bus

DC-

$110_{DM}$    $115_Z$    $120_{CM}$    $125_Z$

105

FIG. 3A

100

$130_{CM}$    $140_{DM}$

102

DC+,1

To DC system 1

DC-,1

104

DC+,2

To DC System 2

DC-,2

$130_{DM}$    $135_Z$    $140_{CM}$    $145_Z$

101

FIG. 3B

105-U

111

106-U

113a    112a    113b

112b

FIG. 4A

FIG. 4B

FIG. 5

FIG. 6

14

I1 = Iin_CM + Iin_DM

I2 = Iin_CM - Iin_DM

Two-port network

I3 = Iout_CM + Iout_DM

I4 = Iout_CM - Iout_DM

I_CM

FIG. 7

I$_1$

d/dt

L

Modulator

V$_{out}$

FIG. 8

FIG. 9

FIG. 10

FIG. 11A

EP 4 601 180 A1

$V_{out}$

140a    140b    140n

14

FIG. 11B

Europäisches
Patentamt

European
Patent Office

Office européen
des brevets

# EUROPEAN SEARCH REPORT

**Application Number**

EP 25 15 4848

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | XU QIANMING ET AL: "Analysis and Control of M3C-Based UPQC for Power Quality Improvement in Medium/High-Voltage Power Grid", IEEE TRANSACTIONS ON POWER ELECTRONICS, INSTITUTE OF ELECTRICAL AND ELECTRONICS ENGINEERS, USA, vol. 31, no. 12, 1 December 2016 (2016-12-01), pages 8182-8194, XP011616409, ISSN: 0885-8993, DOI: 10.1109/TPEL.2016.2520586 [retrieved on 2016-07-08] * Section 1. INTRODUCTION; Subsection II. B. Equivalent Circuit of M3C-UPQC; Subsection IV. A. External Compensation Control; Subsection IV. A. External Compensation Control; Section V. EXPERIMENTAL VERIFICATION; Equations 23, 25; figures 1,2,6,7; tables 1-3 * | 1-15 | INV. H02M7/5387 H02M7/483 H02M3/00 H02M1/12 H02M1/44 H02J1/02 H02J1/08 H02J3/01 |
| | ----- | | |
| A | OGUNDIRAN YINKA LEO ET AL: "Insulation Monitoring in Ungrounded Electrical System for More Electric Aircrafts", 2023 IEEE WORKSHOP ON ELECTRICAL MACHINES DESIGN, CONTROL AND DIAGNOSIS (WEMDCD), IEEE, 13 April 2023 (2023-04-13), pages 1-5, XP034337231, DOI: 10.1109/WEMDCD55819.2023.10110936 * Section III. INSULATION MONITORING DEVICE (IMD) FOR AEROSPACE; figures 1,4,7,8 * | 1-15 | **TECHNICAL FIELDS SEARCHED (IPC)** H02M H02J |
| | ----- | | |
| | -/-- | | |

The present search report has been drawn up for all claims

| Place of search | Date of completion of the search | Examiner |
|---|---|---|
| The Hague | 3 June 2025 | Kanelis, Konstantin |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

...................................................................................................
& : member of the same patent family, corresponding document

EPO FORM 1503 03.82 (P04C01)

Europäisches
Patentamt

European
Patent Office

Office européen
des brevets

# EUROPEAN SEARCH REPORT

**Application Number**

EP 25 15 4848

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | US 2022/263335 A1 (KOUKETSU KAORU [JP]) 18 August 2022 (2022-08-18) * paragraphs [0046], [0061]; figures 1-5 * | 1-15 | |
| A | CN 106 099 937 A (UNIV HUNAN) 9 November 2016 (2016-11-09) * abstract; figures 1,4 * | 1-15 | |

----- 

----- 

TECHNICAL FIELDS
SEARCHED        (IPC)

The present search report has been drawn up for all claims

| Place of search | Date of completion of the search | Examiner |
|---|---|---|
| The Hague | 3 June 2025 | Kanelis, Konstantin |

CATEGORY OF CITED DOCUMENTS

X : particularly relevant if taken alone
Y : particularly relevant if combined with another
   document of the same category
A : technological background
O : non-written disclosure
P : intermediate document

T : theory or principle underlying the invention
E : earlier patent document, but published on, or
   after the filing date
D : document cited in the application
L : document cited for other reasons

...........................................................................

& : member of the same patent family, corresponding
   document

EPO FORM 1503 03.82 (P04C01)

## ANNEX TO THE EUROPEAN SEARCH REPORT
## ON EUROPEAN PATENT APPLICATION NO.

EP 25 15 4848

This annex lists the patent family members relating to the patent documents cited in the above-mentioned European search report.
The members are as contained in the European Patent Office EDP file on
The European Patent Office is in no way liable for these particulars which are merely given for the purpose of information.

03-06-2025

| Patent document cited in search report | Publication date | Patent family member(s) | Publication date |
|---|---|---|---|
| US 2022263335 A1 | 18-08-2022 | JP 7095672 B2 | 05-07-2022 |
| | | JP 2021072697 A | 06-05-2021 |
| | | US 2022263335 A1 | 18-08-2022 |
| | | WO 2021085346 A1 | 06-05-2021 |
| CN 106099937 A | 09-11-2016 | NONE | |